# EUROPEAN PATENT SPECIFICATION

(11) **EP 1 927 157 B1**
(45) Date of publication and mention of the grant of the patent: **08.06.2011**
(21) Application number: 06813798.3
(22) Date of filing: 28.08.2006
(51) Int. Cl.: H01Q 1/27, H01Q 1/28, H01Q 1/32, H01Q 3/26, H01Q 21/00

(54) **ANTENNA TRANSCEIVER SYSTEM**
ANTENNEN-SENDER-EMPFÄNGER-SYSTEM
SYSTEME D'EMETTEUR-RECEPTEUR D'ANTENNE

(30) Priority: 20.09.2005 US 230376
(43) Date of publication of application: 04.06.2008
(73) Proprietor: Raytheon Company, Waltham, Massachusetts 02451-1449 (US)
(72) Inventor: NEWBERG, Irwin L., Pacific Palisades, CA 90272-2800 (US); CHANG, Ike Y., Santa Monica, CA 90405-2518 (US)
(74) Representative: Lindner, Michael
(86) International application number: PCT/US2006/033376
(87) International publication number: WO 2007/035224

(56) References cited:
- US-A- 5 281 960
- US-A- 5 493 305
- US-A- 5 864 481
- US-A- 5 886 667
- US-B1- 6 630 905

## Description

### FIELD OF THE INVENTION

This invention relates generally to a communication system capable of operating over multiple frequency bands to transmit and receive signals. More particularly, this invention relates to a transceiver system integrated into a helmet, using a vertically stacked system design, wherein the system transmits and receives signals which may be voice, data, IR and/or RF signals

### BACKGROUND

In order to communicate with their commanders or other friendly forces, soldiers must often carry bulky radios having low-gain, omni-directional antennas. These low-gain, omni-directional antennas waste energy by transmitting RF energy in all directions simultaneously. Additionally, omni-directional antennas subject the soldier to an increased risk of detection by enemy forces employing communications countermeasures.

Similar problems exist for firefighters, rescue personnel, law enforcement agencies and other users that are part of a communications network. Omi-directional communication systems require large amounts of power, and the quality of a transmitted or received signal is often relatively poor. Operationally, space and weight restrictions must be considered in addition to the need to communicate effectively. These system limitations may prevent the user, ultimately, from successfully accomplishing a mission.

A further drawback to conventional communications systems is the difficulty associated with integrating components, operating over different frequency bands, into a single, compact, lightweight multi-band system. More specifically, systems designed for voice and data communications do not typically include a capability to track and detect targets using radar. Likewise, these systems do not have infrared ("IR") sensors for receiving and processing IR signals. Modifying conventional sensor/processing arrays to facilitate multi-band data transfer often results in bulky, expensive and difficult to operate systems with limited range and utility. The volume required to house such systems, and the power required to operate them, are often prohibitive.

Hence, there is a need for a communications system that provides for the seamless and efficient transmission and receipt of directed voice and data signals, as well as radar and IR signals used to detect and track targets. The system must be lightweight, compact, and user friendly, allowing for hands-free operation of the system at the discretion of the user. Various relevant prior art systems are described in US 5 886 667, US 549 305 and US 6 630 905.

### SUMMARY

The antenna transceiver system herein disclosed and as set art in claim 1 advances the art and overcomes problems articulated above by providing an user friendly, integrated system for directed transmission and receipt of multiple signals over a plurality of frequency bands.

### BRIEF DESCRIPTION OF THE DRAWINGS

FIG. 1 is a schematic of an antenna transceiver system;

FIG. 2 is a schematic of the antenna transceiver system of FIG. 1 having both a radar signal detection/generation capability and a phase conjugation capability;

FIG. 3 is a schematic of the antenna transceiver system of FIG. 2 having an IR signal detection capability;

FIG. 4 is a perspective view of an antenna layer lattice;

FIG. 5 is an exploded view of a transceiver system integrated into the layers of a headgear worn by a user;

FIG. 6 is a perspective view of a heads-up display;

FIG. 7 is a perspective view of a vehicle mounted system;

FIG. 8 is a perspective view of a backpack mounted system;

FIG. 9 is a representation of an operational environment wherein a user transmits and receives a plurality of signals; and

FIG. 10 is a representation of a multiple "master communication station" environment.

### DETAILED DESCRIPTION

Before proceeding with the detailed description, it should be noted that the present teaching is by way of example, not by limitation. The concepts herein are not limited to use or application with one specific type of antenna transceiver system. Thus, although the instrumentalities described herein are for the convenience of explanation, shown and described with respect to exemplary embodiments, the principles herein may be equally applied in other types of antenna transceiver systems.

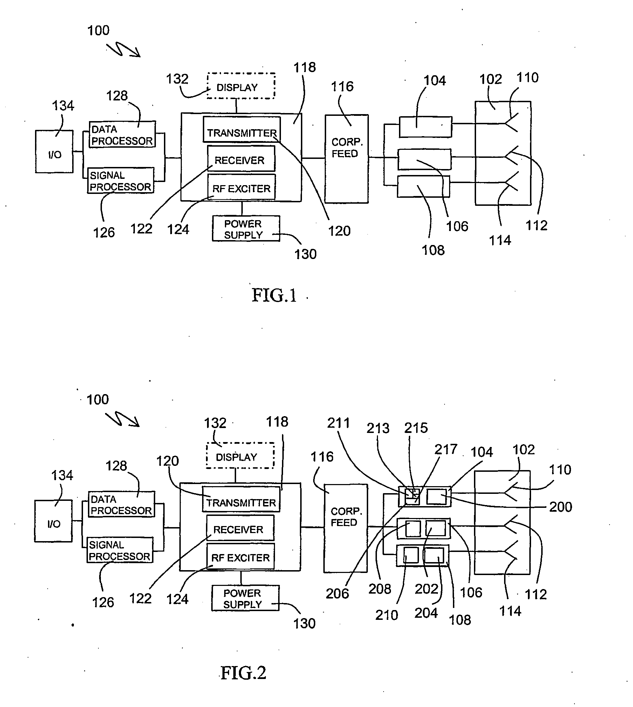

FIG. 1 shows a schematic of an antenna transceiver system **100** for integration into a headgear of a user, or for use with other designated carrying platforms such as a man-transportable backpack or a combat vehicle. In the vehicle mounted configuration, system **100** may be mounted on the vehicle as a "stand alone" subsystem. Alternatively, system **100** may be integrated as an appliqué into the structure or "skin" of the vehicle.

System **100** includes an antenna array **102** which is an active, phased array. The antenna array **102** may be an electronically scanned, phased array ("ESA"), however, it may also be any of a type of phased array antennas well known in the art. Also, a transmit/receive ("T/R") module, of which modules **104, 106** and **108** are exemplary, is associated with each radiating element of the antenna array **102,** for example elements **110, 112** and **114.** Each individual T/R module, e.g. module **104,** scans a small fixed area electronically, thereby negating the need to mechanically move the entire antenna array **102** when realignment of the antenna array **102** is required.

A corporate feed network **116,** of a type well known in the art, is positioned to transmit a signal to, or receive a signal from, T/R modules **104, 106, 108.** The feed network **116** is coupled to a transceiver unit **118** of standard design. The transceiver unit **118** includes a transmitter module **120** and a receiver module **122.** The transceiver unit **118** downconverts signals received by system **100** to an intermediate frequency prior to subsequent amplification and processing of the signals. Alternatively, the transceiver unit **118** upconverts transmission signals to the transmission frequency prior to transmitting the signal to a known or desired receiver. The up and down conversion is facilitated by a signal provided by an RF exciter **124.**

Still referring to FIG. 1, system **100** includes a signal processor 126 for processing RF signals received from transceiver unit **118.** Similarly, a data processor/controller **128** processes data signals received by system **100.** Data processor/controller **128** also controls and directs system **100** functionality, as well as many of the signal manipulation tasks performed by system **100.** Of note, signal processor **126** and data processor/controller **128** are of a type well known in the pertinent art. The signal processor **126** and data processor/controller **128** may be co-located with other components of system **100,** such as transceiver unit **118.** Alternatively, signal processor **126** and data processor/controller **128** may be remotely positioned, for example in a user's backpack or co-located with other vehicle components. When remotely positioned, a data link (not shown) sends and receives signals between the processors **126, 128** and transceiver unit **118.**

In addition to signal processor **126** and data processor/controller **128,** a power supply **130** is co-located with other components/modules of system **100** (e.g. transceiver unit **118,** antenna array **102**). Alternatively, power supply **130** may be remotely positioned. The power supply **130** may be, by way of example but not limited to, a conventional battery pack, a solar cell integrated with system **100,** or a source of radiated microwaves for providing DC power. In one embodiment, antenna array **102,** transceiver unit **118,** and other components/modules of system **100,** including power supply **130,** are integrated into the headgear of a user. Alternatively, power supply **130** can be mounted in a backpack carried by the user. If remotely positioned, a power cable (not shown) connects power supply **130** to the remainder of system **100.**

The system **100** includes a display **132** for visually displaying received data. In one embodiment of the present system **100,** display **132** is a heads-up display for use with the headgear of a user. In yet another embodiment, display **132** is a display screen or monitor for use with vehicle or man-transportable systems **100.** The system **100** also includes an input/output (I/O) interface **134** common in the art.

In the embodiment of system **100** depicted in FIG. 1, antenna array **102** performs as an omni-directional antenna, and system **100** may transmit and receive radio/digital data signals. This mode of operation is the default mode for system **100.** Alternatively, as discussed in greater detail below, system **100** transmits and receives well defined directional signals over multiple frequency bands.

Referring now to the embodiment of FIG. 2, system **100** includes a plurality of phase shifters, of which phase shifters **200, 202,** and **204** are exemplary. The phase shifters **200, 202, 204** are integrated into the T/R modules, e.g. modules **104, 106** and **108.** In at least one embodiment, system **100** uses phase shifters, e.g. phase shifters **200, 202, 204,** to steer both incoming and outgoing RF signals. Furthermore, with the inclusion of phase shifters **200, 202, 204,** system **100** can also be used as a compact radar system to detect and track targets in the field of view ("FOV") of antenna array **102.** The FOV may typically be defined by the volume capability or "footprint" of the antenna array. The radar function can be employed contemporaneously with the communication function discussed above, or system **100** can be set to operate in either a "radar only" or "voice/data only" mode.

In addition to providing a radar capability, beam steering (using phase shifters **200, 202,** and **204**) generates high-gain, high fidelity beams which lead to higher quality line-of-sight ("LOS") transmissions and/or receptions. As opposed to omni-directional antennas, beam steering also decreases the possibility of signal interception. Further, beam steering reduces the overall power required to transmit a given RF signal. Reduced power allows for the use of smaller power supplies **130** with a longer operational life. As discussed above, system **100** has the capability to operate in either a beam steering mode, or as an omni-directional antenna (default mode).

Still referring to FIG. 2, system **100** includes a plurality of phase conjugation modules integrated into the T/R modules **104, 106,** 108, such as phase conjugation modules **206, 208,** and **210.** The specific components and operation of the phase conjugation modules, e.g. phase conjugation module **206,** as well as the beam steering technique discussed above, are detailed in U.S. Patent 6,630,905 entitled "System and Method for Redirecting a Signal Using Phase Conjugation" to Newberg et al. The referenced patent is assigned to the present assignee and incorporated by reference herein. More specifically, the phase conjugation modules **206, 208, 210** each include an RF mixer **211,** a first **213** and a second switch 215 for helping to switch between receive and transmit mode, and an RF filter **217,** all of which function to generate a phase-conjugate wave. Of note, these modules **206-210** do not necessary contain any conventional phase shifters, nor do the modules **206-210** receive conventional steering commands in order to redirect the received signal.

As discussed in the cited reference, phase conjugation results in the transmission of a phase-conjugate wave having a wavefront identical to a wavefront of a corresponding incoming signal. The phase-conjugate wave propagates along a same beam path as the incoming signal, in a direction opposite that of the incoming wave. As such, the phase-conjugate wave is radiated directly back towards the source of the incoming signal, without knowing the incoming signal source location or the location of the receiving transceiver antenna system. When multiple signals are received from a number of locations in the field of view of the transceiver antenna, each signal is independently transmitted back to its respective separate location.

There are numerous operational advantages to a phase conjugation system such as system **100.** For example, phase conjugation provides a means for automatically pointing and tracking a transmitted signal. Directional signals of this sort are difficult to intercept, and they provide for higher quality transmissions requiring relatively little power. Further, phase conjugation inherently helps to correct wave distortions induced in a wave as the incoming/outgoing wave passes through a distorting medium. Also, the components of the phase conjugation modules, e.g. module **206,** can be used to measure the relative phase between the conjugated signals generated in the T/R modules, e.g. T/R module **104.** The phase measurements are then used to calculate the direction of the radiated phase conjugated beam, using algorithms well known in the art. This capability allows system **100** to not only automatically direct a signal to a particular node from which system **100** recently received a signal, but to know the precise location of the node based on the received signal. In this context, the term "node" refers to an electronic source of a previously transmitted and received signal. In addition, coding of the received signals can be used to allow one or more switches to stop the transceiver signals. Thus, the retransmission of a signal from an unwanted source can be prevented.

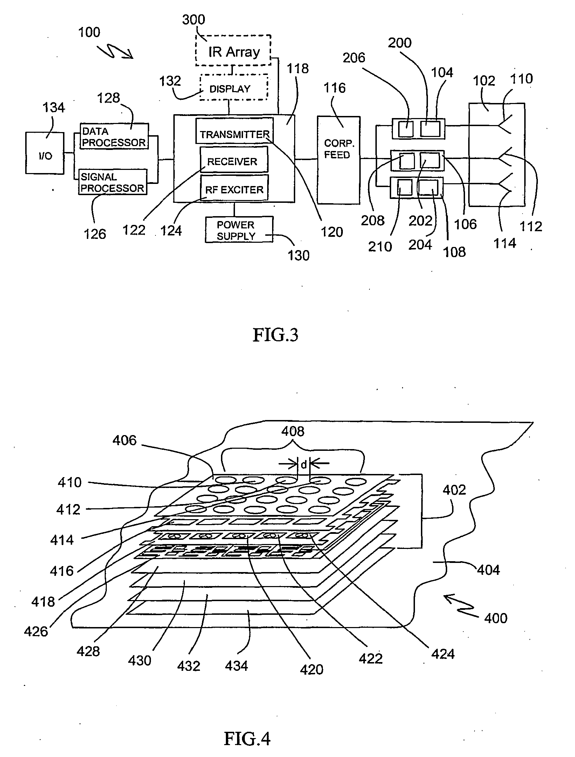

Referring now to FIG. 3, one embodiment of system **100** includes an infrared ("IR") receiver array **300** for receiving IR signals emitted or reflected from a source. As can be appreciated by the skilled artisan, infrared waves having a wavelength of 3-5 µm (near-IR) or 8-12 µm (far-IR) are emitted or reflected from natural and man-made objects in the user's environment. These waves are detected by the IR receiver array **300,** and processed in signal processor **126.** The processed signals produce a thermal image of structure in the FOV of the user, thereby giving the user a night-vision capability. The IR images are viewed on system display **132,** which is typically either a heads-up display or a display monitor.

The integration of the components and modules discussed above into a stacked compact tile **400** is shown in FIG. 4. The tile **400** includes a plurality of planes **402** positioned vertically in a column relative to an outer surface **404** of a carrier platform (e.g. headgear, vehicle, etc.). A particular vertical configuration, or Array Lattice Layers ("ALL"), incorporated by reference in the present disclosure is detailed in U.S. Patent 5,493,305 entitled "Small Manufacturable Array Lattice Layers" to Woodridge et al. The referenced patent is assigned to the present assignee and is incorporated by reference herein.

As disclosed in the referenced patent to Woodridge et al, the ALL technology provides a low cost, lightweight, low profile implementation of an antenna transceiver system **100.** The ALL material or tiles **400** can be efficiently manufactured as reels of laminated material for large-scale production. The ALL technology provides the capability to integrate transceiver system **100** into the structure of a carrier platform, e.g. a helmet, or to lay a stacked structure on an inner or outer surface of a platform, e.g. the inner or outer skin of a vehicle.

Referring once again to FIG. 4, plane 406 includes an antenna array **408** having a plurality of radiating elements , of which elements **410, 412,** and **414** are exemplary, positioned in a thin, flexible, multi-layer dielectric film (not shown) of the ALL technology. The number of elements and the distance "d" between any two elements, is related to the operational frequency or frequencies requirements of system **100.** In particular, the elements used in a millimeter wave system (300-3000 GHz) are typically smaller than those used for systems operating at frequencies in the range of 1-100 GHz. As such, the number of millimeter wave elements that can be placed within a fixed physical geometry, such as plane **406,** is greater than the number of elements possible with a lower frequency system (e.g. 1-100 GHz). The distance "d" between the smaller 300-3000 GHz elements would be correspondingly smaller.

It is possible for system **100** to have multiple arrays **408** operating over different frequency bands. For example, an embodiment of system **100** having a Global Positioning System ("GPS") requires an antenna array **408** operating in L band, which is to say between approximately 1.2-1.5 GHz. The element spacing "d" at those frequencies is about eight inches, therefore, a phase conjugation array having small, closely spaced elements, e.g. elements **410, 412, 414,** cannot be used to steer the GPS beam. In this instance, system **100** includes an L-band omni-directional antenna (not shown) to receive and transmit GPS signals. The omni-directional antenna is integrated into tile **400,** disposed on one of the many planes **402.** Further, antenna array **408** may include extender arms (not shown) for increasing the size of array **408** and the number of radiating elements to provide for lower frequency communications.

In addition to plane **406,** system **100** includes a ground plane **416.** Further, a plane **418** contains embedded circulators, e.g. circulators **420, 422,** and **424,** for connecting either a receive circuit or a transmit circuit to an associated radiating element **410, 412, 414.** Continuing through the depth of the tile **400,** T/R modules, such as T/R modules **104, 106, 108** in FIG. 1, are positioned on a plane **426.** In one embodiment, phase shifters such as phase shifters **200, 202, 204** in FIG. 2, and phase conjugation modules such as phase conjugation modules **206, 208, 210,** are also located on plane **426.**

Other components of system **100,** such as transmitter module **120** and receiver module **122** are disposed on planes throughout the depth of the plurality of planes **402.** It should be understood that the arrangement of system **100** components and modules disclosed above is by way of example only. The various components and modules of system **100** can be rearranged and located on any number of planes aside from those shown. The present arrangement of components and modules, or an arrangement such as that disclosed in U.S. Patent 5,493,305, are but two of numerous possibilities, depending on specific design requirements and operational considerations for system **100.**

In one embodiment, system **100** includes a cold plate **428,** or other mechanism for cooling tile **400.** As described in U.S. Patent 5,493,305 referenced above, cold plate **428** may have cooling channels (not shown) for cycling coolant through channel manifolds (not shown) to cool array **102** and other system **100** components.

Referring again to the embodiment of FIG. 3, IR receiver array **300** may also be included on one or more of the plurality of planes **402** of FIG. 4. The components of array **300** may be positioned on a single plane, e.g. plane **430,** or they may be disposed on a number of planes. Other planes, e.g. planes **432** and **434,** include additional components of system **100** such as power supply **130.** Further, a signal processor, e.g. signal processor **126,** and a data processor/controller, such as data processor/controller **128,** are also positioned on one or more of the planes **402.** The specific number of planes **402,** and the positioning of components and modules on the planes, is dependent on the application and intended use and the corresponding design requirements and considerations of the system, all of which may vary while still remaining true to the intent and scope of the present disclosure.

As disclosed in U.S. Patent 5,493,305, the ALL configuration includes vertically disposed electrical interconnects (not shown) between the planes of a given tile 400, as well as horizontal interconnects (not shown) between tiles. These interconnects include vias (not shown) which may be metal traces, coplanar microwave microbridges, or other techniques well known in the art. Additionally, photodiodes (not shown) and fiber optic cables (not shown) may be incorporated into the tile **400** stack to provide optical signal transfer between the plurality of planes **402.**

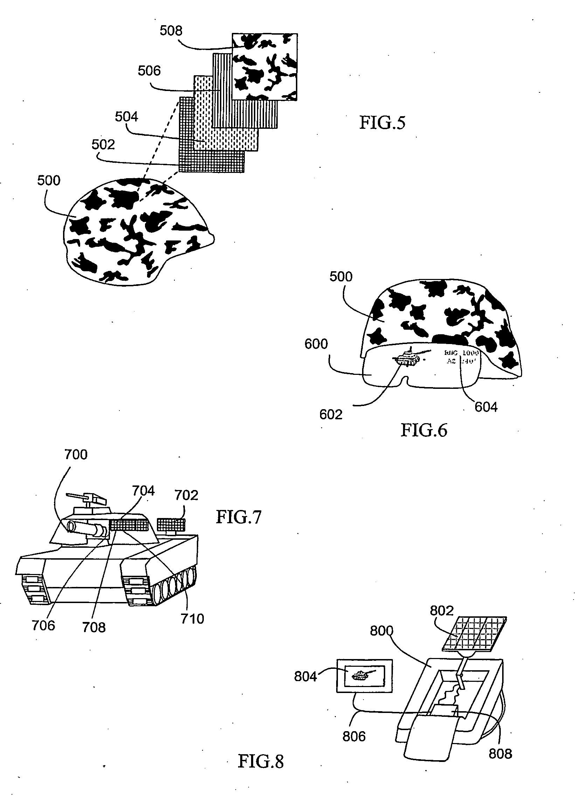

The integration of system **100** into a user designated platform, such as a helmet 500, is depicted in FIG. 5, however, the system may, in fact, be used on any number of platforms, as will be discussed in greater detail below. As shown in FIG. 5, the layers of helmet **500** include Kevlar **502,** or another composite material which is the base protection layer for helmet **500.** The transceiver system **100,** in the ALL configuration, is positioned as a layer **504** between the layer of Kevlar **502** and a radome **506.** The radome **506** is also a composite material shaped to match the shape of helmet **500.** The outside layer **508** or surface is a camouflage layer, typically made of cloth and containing any one of a number of a camouflage patterns.

In the particular embodiment shown in FIG. 5, transceiver system **100** is embedded in the structure of helmet **500.** In an alternate embodiment, system **100** is mounted as an appliqué to helmet **500,** immediately below or on top of outer layer **508.**

Cross-referencing for a moment FIGs. 5 and 6, the helmet **500** mounted embodiment of system **100** may include a heads-up display **600** attached to helmet **500.** The heads-up display **600** can project for the user images **602** of targets, either in the user's line of sight, or elsewhere within the FOV of antenna array **102.** The target data may result from IR signals received by system **100,** RF signals received, or by both. Stated differently, in one embodiment of system **100,** the user can choose between projected IR images or radar data. Additional relevant data and information **604** can also be displayed as well, as shown in FIG. 6. In one embodiment, heads-up display **600** is rigidly fixed to helmet **500.** In yet another embodiment, display **600** can either be removed from helmet **500,** or folded out of the way of the user when not in use.

In alternate embodiments, as shown in FIGs. 7 and 8, system **100** is mounted onto, and integrated into, a vehicle system or man-transportable backpack. FIG. 7 depicts a vehicle **700** mounted system **100.** As shown, system **100** may be mounted as a separate vehicle **700** subsystem **702.** Alternatively, system **100** may be integrated into the structure of vehicle **700,** using a plurality of appliqués, of which appliqué **704** is exemplary. Each appliqué **704** includes a plurality of ALL tiles, such as tiles **706, 708** and/or **710.**

With a backpack **800** mounted system **100,** an array **802** of ALL tiles can be attached to and stored in backpack **800.** As shown in FIG. 8, system 100 includes a portable display monitor **804** connected via cable **806** to a housing **808.** The housing **808** typically includes system **100** electronics such as power supply **130.** The backpack **800** based system **100** depicted in FIG. 8 is operated while the user is either stationary or moving, and includes an interconnect to a heads-up display **600** integrated into a helmet **500** of the user.

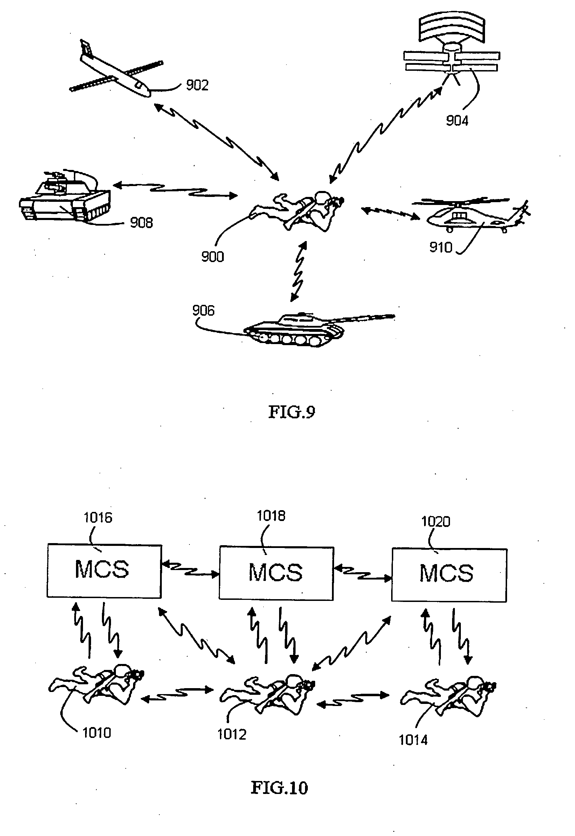

Operationally, as shown in FIG. 9, system **100** is deployed to support communications between a user **900** and any number of supporting systems. For example, user **900** may be cued by, and receive data from, an unmanned aerial vehicle ("UAV") **902** or a satellite **904.** In particular, UAV **902** or satellite **904** may serve as a relay station for passing data between user **900** and a second communication means. For example, user **900** may be cued as to the location of an enemy system **906** based on information received by a second user in the area. An individual user **900** may also receive communications from vehicles **908** within the FOV of system **100.** The vehicles **908** may be equipped with an antenna transceiver system **100,** or they may communicate with user **900** by more conventional means. Also, user **900** may detect IR or RF signals from an unknown system **910.** The system **100** processes the signals to identify whether system **910** is friend or foe.

FIG. 10 depicts yet another scenario wherein multiple users, e.g. users **1010,** 1012 and **1014** can communicate with each other, with their own Master Control Station ("MCS") or with other MCSs, e.g. MCSs **1016, 1018** and **1020.** The ability to pass data freely between users **1010, 1012, 1014** and MCSs **1016, 1018, 1020** respectively significantly enhances efficiency and increases the probability of mission success. Although the users, e.g. user **1010,** depicted in FIG. 10 are soldiers, use of system **100** is not limited to military applications. Firefighters, law enforcement, rescue personnel and users requiring hands-free communications can benefit from one or more of the embodiments disclosed above.

Changes may be made in the above methods, devices and structures without departing from the scope hereof. It should thus be noted that the matter contained in the above description and/or shown in the accompanying drawings should be interpreted as illustrative and not in a limiting sense. The following claims are intended to cover all generic and specific features described herein, as well as all statements of the scope of the present method, device and structure, which, as a matter of language, might be said to fall therebetween.

## Claims

1. A helmet (500) comprising:
a plurality of transmit/receive modules (104, 106, 108) for transmitting and receiving signals; and
an antenna array (102) comprising a plurality of radiating elements (110, 112, 114), **characterized in that** the transmit/receive modules (104, 106, 108) and antenna array (102) are formed as integral components of the structure of the helmet (500), the structure of said helmet comprising a pluratity of planes aligned vertically relative to an outer surface of the helmet
wherein the transmit/receive modules (104, 106, 108) and antenna array (102) are disposed on a first plurality of said planes (402),
wherein each transmit/receive module (104, 106, 108) comprises a phase conjugation module (206, 208, 210); wherein a power supply (130), a signal processor (126) and a data processor/controller (128) and a means for cooling the antenna array (408) and transmit/receive modules (104, 106, 108) during operation are formed as integral components of the structure of the helmet (500) and being disposed on a second plurality of said planes;
wherein the antenna array (102) is an electronically scanned array including a plurality of phase shifters (200, 202, 204) for electronically steering transmitted and received RF signals,
the helmet (500) further comprising:
a heads-up display;
a RF mixer (211);
a first switch (213);
a second switch (215); and
a filter(217)
wherein the RF mixer (211), first switch (213), second switch (215) and filter (217) are used to generate a transmitted signal having a wavefront identical to a wavefront of a received signal, and further wherein the transmitted signal travels along a beam path of the received signal to a source of the received signal.

## Patentansprüche

1. Helm (500), mit:
einer Mehrzahl von Übertragungs-/Empfangsmodulen (104, 106, 108) zum Übertragen und Empfangen von Signalen; und
einer Antennenanordnung (102) mit einer Mehrzahl von abstrahlenden Elementen (110, 112, 114), **dadurch gekennzeichnet, dass** die Übertragungs-/Empfangsmodule (104, 106, 108) und die Antennenanordnung (102) als integrale Komponenten der Struktur des Helms (500) ausgebildet sind, wobei die Struktur des Helms eine Mehrzahl von Ebenen aufweist, die vertikal relativ zu einer Außenoberfläche des Helms ausgerichtet sind,
wobei die Übertragungs-/Empfangsmodule (104, 106, 108) und die Antennenanordnung (102) auf einer ersten Mehrzahl der Ebenen (402) angeordnet sind,
wobei jedes Übertragungs-/Empfangsmodul (104, 106, 108) ein Phasenkonjugationsmodul (206, 208, 210) aufweist, wobei eine Energieversorgung (130),
eine Signalverarbeitungseinheit (126) und eine Datenverarbeitungseinheit/Regelungseinheit (128) und Mittel zum Kühlen der Antennenanordnung (408) und der Übertragungs-/Empfangsmodule (104, 106, 108) während des Betriebs als integrale Komponenten der Struktur des Helms (500) ausgebildet sind und auf einer zweiten Mehrzahl der Ebenen angeordnet sind;
wobei die Antennenanordnung (102) eine elektronisch gesteuerte bzw. abgetastete Anordnung ist, die eine Mehrzahl von Phasenschiebern (200, 202, 204) zum elektronischen Steuern von übertragenen und empfangenen Radiofrequenzsignalen bzw. HF-Signalen aufweist,
wobei der Helm (500) des Weiteren Folgendes aufweist;
eine Front-Anzeigevorrichtung bzw. ein Heads-up-Display;
einen Radiofrequenz-Mischer bzw. einen HF-Mischer (211);
einen ersten Schalter (213);
einen zweiten Schalter (215); und
einen Filter (217),
wobei der HF-Mischer (211), der erste Schalter (213), der zweite Schalter (215) und der Filter (217) dazu verwendet werden, ein übertragenes Signal zu erzeugen, das eine Wellenfront aufweist, die identisch zu einer Wellenfront eines empfangenen Signals ist, und des Weiteren wobei sich das übertragene Signal entlang einem Strahlweg des empfangenen Signals zu einer Quelle des empfangenen Signals ausbreitet.

## Revendications

1. Casque (500) comprenant:
une pluralité de modules émetteurs-récepteurs (104, 106, 108) destinés à émettre et recevoir des signaux ; et
un réseau d'antennes (102) comprenant une pluralité d'éléments rayonnants (110, 112, 114), **caractérisé en ce que** les modules émetteurs-récepteurs (104, 106, 108) et le réseau d'antennes (102) sont formés sous forme de composants intégrés à la structure du casque (500), la structure dudit casque comprenant une pluralité de plans alignés verticalement par rapport à une surface extérieure du casque,
dans lequel les modules émetteurs-récepteurs (104, 106, 108) et le réseau d'antennes (102) sont disposés sur une première pluralité desdits plans (402), dans lequel chaque module émetteur-récepteur (104, 106, 108) comprend un module de conjugaison de phase (206, 208, 210) ; dans lequel une alimentation électrique (130), un processeur de signal (126) et une unité de traitement de données/commande (128) et un moyen destiné à refroidir le réseau d'antennes (408) et les modules émetteurs-récepteurs (104, 106, 108) pendant leur fonctionnement sont réalisés sous forme de composants intégrés à la structure du casque (500), et sont disposés sur une deuxième pluralité desdits plans,
dans lequel le réseau d'antennes (102) est un réseau à balayage électronique comportant une pluralité de déphaseurs (200, 202, 204) destinés à orienter électroniquement des signaux RF émis et reçus,
le casque (500) comprenant en outre :
un afficheur tête haute ;
un mélangeur RF (211) ;
un premier commutateur (213) ;
un second commutateur (215) ; et
un filtre (217),
dans lequel le mélangeur RF (211), le premier commutateur (213), le second commutateur (215) et le filtre (217) sont utilisés pour générer un signal émis ayant un front d'onde identique à un front d'onde d'un signal reçu et dans lequel, en outre, le signal émis se propage le long d'un chemin de faisceau du signal reçu vers une source du signal reçu.
